# EUROPEAN PATENT APPLICATION

(11) **EP 4 163 256 A1**
(43) Date of publication of application: **12.04.2023**
(21) Application number: 21818490.1
(22) Date of filing: 10.05.2021
(51) Int. Cl.: C01G 33/00

(54) **NIOBATE COMPOUND AND NIOBIUM-CONTAINING SLURRY**

(30) Priority: 04.06.2020 JP 2020097336
(71) Applicant: Mitsui Mining & Smelting Co., Ltd., Shinagawa-ku Tokyo 141-8584 (JP)
(72) Inventor: HARA, Syuhei, Omuta-shi, Fukuoka 836-0003 (JP); ARAKAWA, Daiki, Omuta-shi, Fukuoka 836-0003 (JP); KUMAGAI, Akinori, Omuta-shi, Fukuoka 836-0003 (JP)
(74) Representative: Novagraaf Technologies
(86) International application number: PCT/JP2021/017723
(87) International publication number: WO 2021/246111

(57) **Abstract**

Provided is a novel niobate compound that has excellent reactivity with alkali metal salts and can be reacted with alkali metal salts at room temperature.

The niobate compound has a ratio (first peak/second peak) of the intensity of a peak (first peak) having the highest intensity at 2θ = 9.4° ± 1.5° to the intensity of a peak (second peak) having the highest intensity at 2θ = 29.0° ± 1.5° being 1.3 or more in the X-ray diffraction pattern.

## Description

### TECHNICAL FIELD

The present invention relates to a niobate compound and a niobium-containing slurry having excellent reactivity with alkali metals.

### BACKGROUND ART

Niobium oxides, niobium hydroxides, polyacids of niobium, and the like are known as niobium acids containing niobium (Nb) and oxygen (O). These have been used as raw materials and additives in applications such as optics, electronics, and batteries.

These have also been studied as catalysts since the niobium acids exhibit solid acidity. For example, Non-Patent Document 1 reports that among the metal oxide clusters [MxOy]n- known as polyacids, those of Group 5 elements such as Nb have particularly excellent base catalytic activity.

Meanwhile, niobium oxides containing alkali metals and the like have been increasingly used as raw materials for electronic components such as frequency filters and capacitors, and as target raw materials for sputtering. Recently, as alternative materials for lead zirconate titanate (PZT), which is a typical piezoelectric ceramic, in addition to potassium niobate (KNbOs), sodium niobate (NaNbOs), and lithium niobate (LiNbOs), perovskite-type metal oxides containing sodium niobate, such as a solid solution of sodium niobate and barium titanate, and a solid solution of sodium niobate and potassium niobate, have been attracting attention as candidates for lead-free piezoelectric ceramics.

As for niobium acids and niobate compounds, for example, Patent Document 1 discloses a niobium oxide powder having a half value width of 0.08° to 0.8° at the maximum peak in a range of 2θ (diffraction angle) = 20° to 30° in the X-ray diffraction analysis using CuKα1 rays.

Patent Document 2 also discloses a niobium oxide powder in which the maximum peak in a diffraction angle range of 2θ = 20° to 30° is located at 2θ = 22.6° ± 0.5° or 2θ = 28.4° ± 0.5°, and the ratio Ix/ly of the maximum peak intensity Ix at 2θ = 22.6° ± 0.5° to the maximum peak intensity ly at 2θ = 23.7° ± 0.5° is 10 or more, by X-ray diffraction analysis based on CuKα rays.

Patent Document 3 discloses a method for synthesizing NaNbO₃ particles by a solvothermal reaction of a suspension composed of a niobium compound and a sodium hydroxide (NaOH) solution for the purpose of improving the performance of piezoelectric ceramics.

Patent Document 4 discloses a method for producing NaNbO₃ particles, in which niobium oxide (Nb₂O₅), a NaOH aqueous solution, and NaNbO₃ produced in a separate step are mixed, and the mixture is subjected to hydrothermal treatment by exposing the mixture to high temperature and high pressure using an autoclave.

Non-Patent Document 2 discloses a method for synthesizing LiNbOs, including: adding hydrous niobium oxide (Nb₂O₅·nH₂O) to a tetramethylammonium hydroxide solution (TMAH); heating and stirring the mixture to obtain an Nb-TMAH solution; mixing the Nb-TMAH solution with LiOH to obtain a LiNbO₃ precursor solution; and heating the LiNbO₃ precursor solution in an electric furnace.

Patent Document 5 discloses a method for preparing an alkali metal niobate, including: preparing a suspension composed of an alkaline aqueous solution containing sodium hydroxide (NaOH) and potassium hydroxide (KOH), crystalline Nb₂O₅, and a surfactant; subjecting the suspension to hydrothermal treatment at 200°C using an autoclave to synthesize K₄Na₄NbO·9H₂O particles; and dehydrating the K₄Na₄NbO·9H₂O particles by heat treatment.

Patent Document 6 discloses a technique for a fine particle powder of niobium oxide, and states that the fine particle powder can be used as a slurry.

Patent Document 7 discloses a niobium acid powder containing quaternary ammonium hydroxide as a niobium acid powder having high dispersion continuity when dispersed in water.

### CITATION LIST

### NON-PATENT DOCUMENT

Non-Patent Document 1: "Base Catalytic Application of Polyanion Metal Oxide Clusters" by Seiji Yamazoe, 2018, The Chemical Society of Japan
Non-Patent Document 2: "Preparing LiNbOs Precursor Solution Using TMAH Dissolution Method" by Akira Monkawa, 2016, Tokyo Metropolitan Industrial Technology Center, Research Report, No. 11

### PATENT DOCUMENT

Patent Document 1: Japanese Patent Application Laid-Open (JP-A) No. 2005-247601
Patent Document 2: JP-A No. 2008-266047
Patent Document 3: JP-A No. 2010-241658
Patent Document 4: JP-A No. 2013-224228
Patent Document 5: JP-A No. 2011-132118
Patent Document 6: JP-A No. 2009-073675
Patent Document 7: JP-A No. 2018-131346

### SUMMARY OF THE INVENTION

### PROBLEM TO BE SOLVED BY THE INVENTION

As described above, polyacids of Nb are materials that have attracted attention as catalysts since they have particularly excellent base catalytic activity (see Non-Patent Document 1). In order to obtain such polyacids, it is necessary to react Nb₂O₅ or Nb₂O₅·nH₂O with a metal cation or quaternary ammonium (see Non-Patent Document 2). However, the reactivity of Nb₂O₅ and Nb₂O₅·nH₂O is not high, and thus there has been generally required for performing hydrothermal synthesis or heating to approximately 90°C or higher.

Accordingly, an object of the present invention is to provide a novel niobate compound and a niobium-containing slurry that are excellent in reactivity with alkali metal salts and can be reacted with alkali metal salts at room temperature.

### MEANS FOR SOLVING PROBLEM

The present invention proposes a niobate compound having a ratio (first peak/second peak) of the intensity of a peak (first peak) having the highest intensity at 2θ = 9.4° ± 1.5° to the intensity of a peak (second peak) having the highest intensity at 2θ = 29.0° ± 1.5° being 1.3 or more, preferably being 1.6 or more, and more preferably being 1.7 or more, in the X-ray diffraction pattern by powder X-ray diffraction measurement using CuKα rays.

The present invention also proposes a niobium-containing slurry that contains the above-mentioned niobate compound dispersed in a dispersion medium.

The present invention also proposes a method for producing a niobate compound, including the following 3 steps:
(1) a step of adding a niobium fluoride aqueous solution containing 1 to 100 g/L of niobium in terms of Nb₂O₅ to an ammonia aqueous solution having an ammonia concentration of 5% by mass to 30% by mass for reaction to obtain a niobium-containing precipitate;
(2) a step of removing fluorine from the niobium-containing precipitate obtained in the above step; and
(3) a step of drying the niobium-containing precipitate obtained by removing fluorine.

The present invention also proposes a method for producing a niobium-containing slurry, including the following 3 steps:
(1) a step of adding a niobium fluoride aqueous solution containing 1 to 100 g/L of niobium in terms of Nb₂O₅ to an ammonia aqueous solution having an ammonia concentration of 5% by mass to 30% by mass for reaction to obtain a niobium-containing precipitate;
(2) a step of removing fluorine from the niobium-containing precipitate obtained in the above step; and
(3) a step of dispersing the niobium-containing precipitate obtained by removing fluorine in a dispersion medium to obtain a niobium-containing slurry.

### EFFECT OF THE INVENTION

The niobate compound and the niobium-containing slurry proposed by the present invention have excellent reactivity with alkali metal salts, so that these can be reacted with alkali metal salts at room temperature, and a niobium-containing alkali metal salts having a polyacid structure can be synthesized. Thus, the niobate compound and the niobium-containing slurry proposed by the present invention are industrially extremely useful.

### BRIEF DESCRIPTION OF DRAWINGS

FIG. 1 is an X-ray diffraction pattern of a powder obtained by reacting a niobium-containing slurry (sample) obtained in Example 1 with an aqueous sodium hydroxide solution.
FIG. 2 is an X-ray diffraction pattern of a powder obtained by reacting a niobium-containing slurry (sample) obtained in Comparative Example 2 with an aqueous sodium hydroxide solution.
FIG. 3 is an X-ray diffraction pattern of a niobate compound (sample) obtained by centrifuging a niobium-containing slurry (sample) obtained in Example 1 and drying the resulting precipitate.
FIG. 4 is an X-ray diffraction pattern of a niobate compound (sample) obtained by centrifuging a niobium-containing slurry (sample) obtained in Example 2 and drying the resulting precipitate.
FIG. 5 is an X-ray diffraction pattern of a niobate compound (sample) obtained by centrifuging a niobium-containing slurry (sample) obtained in Example 3 and drying the resulting precipitate.
FIG. 6 is an X-ray diffraction pattern of a niobate compound (sample) obtained by centrifuging a niobium-containing slurry (sample) obtained in Example 4 and drying the resulting precipitate.
FIG. 7 is an X-ray diffraction pattern of a niobate compound (sample) obtained by centrifuging a niobium-containing slurry (sample) obtained in Example 5 and drying the resulting precipitate.
FIG. 8 is an X-ray diffraction pattern of a niobate compound (sample) obtained by centrifuging a niobium-containing slurry (sample) obtained in Comparative Example 1 and drying the resulting precipitate.
FIG. 9 is an X-ray diffraction pattern of a niobate compound (sample) obtained by centrifuging a niobium-containing slurry (sample) obtained in Comparative Example 2 and drying the resulting precipitate.

### MODE(S) FOR CARRYING OUT THE INVENTION

Next, the present invention will be described based on exemplary embodiments. However, the present invention is not limited to the embodiments that will be described below.

### <Present Niobate Compound>

The niobate compound ("present niobate compound") according to an example of the embodiments of the present invention is a compound composed of Nb, O, and H, or of Nb, O, H, and N. Examples of the typical form include ammonium niobate and a salt thereof. However, it is not limited to these.

The present niobate compound is allowed to contain unavoidable impurities. The type of unavoidable impurities is not particularly limited, and examples thereof include Ta, P, Si, B, Sb, and Mn.

Examples of the form of the present niobate compound include powder. However, it is not limited to powder.

The present niobate compound is characterized in that the ratio (first peak/second peak) of the intensity of the peak (first peak) having the highest intensity at 2θ = 9.4° ± 1.5° to the intensity of the peak (second peak) having the highest intensity at 2θ = 29.0° ± 1.5° is 1.3 or more, in the X-ray diffraction pattern by powder X-ray diffraction measurement using CuKα rays.

It is confirmed that when the ratio (first peak/second peak) of the first peak intensity to the second peak intensity is 1.3 or more, the present niobate compound can be reacted with sodium hydroxide at room temperature to synthesize a polyacid (Na₈Nb₆O₁₉·13H₂O).

Thus, in the present niobate compound, the ratio (first peak/second peak) of the first peak intensity to the second peak intensity is preferably 1.3 or more, more preferably 1.4 or more, even more preferably 1.5 or more, still more preferably 1.6 or more, and furthermore preferably 1.7 or more. The upper limit thereof can be considered to be 3.0 or less in common sense.

The present niobate compound can be presumed to be a compound having a polyacid structure. That is, the present niobate compound can be presumed to be a hydrous compound having a structure represented by the formula: [NbₓO_{y}]ⁿ⁻·mH₂O (6 ≤ x ≤ 10, 19 ≤ y ≤ 28, n = 6, and m represents an integer of 0 to 50). Specific examples thereof include a hydrous compound having a structure represented by the formula: [Nb₆O₁₉]⁶⁻·mH₂O. However, it is not limited to this hydrous compound.

The basis for this presumption is that it is highly reactive with alkali metals, and when it is mixed and reacted with NaOH, LiOH, or KOH, a compound having a polyacid structure can be obtained.

### (Reactivity with Alkali Metals)

The present niobate compound is highly reactive with alkali metals and can be reacted by mixing with hydroxides of alkali metals such as NaOH, LiOH, and KOH at room temperature to obtain a compound having a polyacid structure.

Specifically, the present niobate compound can be mixed and reacted with Na hydroxide aqueous solution at room temperature (10°C to 35°C) to synthesize Na₈Nb₆O₁₉·13H₂O.

In this case, whether the reaction product obtained by mixing is Na₈Nb₆O₁₉·13H₂O can be confirmed, for example, by identification by the following X-ray diffraction measurement (XRD).

That is, the precipitate, which is a reaction product, is measured by X-ray diffraction measurement under the following conditions, and can be compared with the XRD pattern of ICDD card No. 00-014-0370 to identify whether or not it is Na₈Nb₆O₁₉·13H₂O. As an example of the measurement conditions and analysis conditions in this case, the following Example conditions can be cited.

However, the identification method is not limited to the method and conditions.

### <Present Production Method>

Next, a preferred method for producing the present niobate compound (referred to as "present production method") will be described.

As an example of the present production method, a production method including: adding a niobium fluoride aqueous solution to an ammonia aqueous solution having a predetermined concentration to obtain a niobium-containing precipitate (referred to as "reverse neutralization step"); removing fluorine from the niobium-containing precipitate (referred to as "F-washing step"); and drying the niobium-containing precipitate obtained by removing fluorine (referred to as "drying step"), can be cited. However, the method for producing the present niobate compound is not limited to this production method.

The present production method can appropriately include other steps or other treatments as long as it has the above steps.

The "step" in the present production method may not be performed in a series of production lines, and may be performed intermittently. In this case, it may be performed intermittently by taking a period of time, changing apparatuses, and changing locations.

### (Reverse Neutralization Step)

In the reverse neutralization step, it is preferable that a niobium fluoride aqueous solution is added into an ammonia aqueous solution having a predetermined concentration to obtain a niobium-containing precipitate. That is, it is preferable to perform reverse neutralization.

It is preferable to perform reverse neutralization by adding a niobium fluoride aqueous solution into an ammonia aqueous solution for neutralization, instead of performing positive neutralization by adding an ammonia aqueous solution into a niobium fluoride aqueous solution for neutralization.

It is presumed that by performing the reverse neutralization, the niobium acid structure becomes a structure that is easily dissolved in water.

The niobium fluoride aqueous solution can be prepared by reacting niobium or a niobium oxide with hydrofluoric acid (HF) to obtain niobium fluoride (H₂NBF₇) and dissolving the niobium fluoride (H₂NBF₇) in water.

Then, the niobium fluoride aqueous solution is preferably prepared by adding water (for example, pure water) so as to contain 1 to 100 g/L of niobium in terms of Nb₂O₅. When the niobium concentration is 1 g/L or more, the niobate compound hydrate is easily dissolved in water. Thus, the niobium concentration of the niobium fluoride aqueous solution is preferably 1 g/L or more in terms of Nb₂O₅, and from the viewpoint of productivity, it is more preferably 10 g/L or more, and even more preferably 20 g/L or more. Meanwhile, when the niobium concentration is 100 g/L or less, the niobate compound hydrate is easily dissolved in water. Thus, in order to more reliably synthesize a niobate compound hydrate that is easily dissolved in water, the niobium concentration is more preferably 90 g/L or less, even more preferably 80 g/L or less, and still more preferably 70 g/L or less.

The pH of the niobium fluoride aqueous solution is preferably 2 or less, and more preferably 1 or less, from the viewpoint of completely dissolving niobium or a niobium oxide.

The ammonia aqueous solution preferably has an ammonia concentration of 5% by mass to 30% by mass.

By setting the ammonia concentration of the ammonia aqueous solution used for the reverse neutralization to 5% by mass or more, it is possible to prevent Nb from remaining undissolved and to make niobium or a niobium acid completely dissolved in water. Meanwhile, the ammonia concentration of the ammonia aqueous solution is preferably 30% by mass or less since it is in the vicinity of the saturated aqueous solution of ammonia.

From such a viewpoint, the ammonia concentration of the ammonia aqueous solution is preferably 5% by mass or more, more preferably 10% by mass or more, even more preferably 15% by mass or more, still more preferably 20% by mass or more, and furthermore preferably 25% by mass or more. Meanwhile, the ammonia concentration thereof is preferably 30% by mass or less, more preferably 29% by mass or less, and even more preferably 28% by mass or less.

In the reverse neutralization step, the amount of the niobium fluoride aqueous solution added to the ammonia aqueous solution (NH₃/Nb₂O₅ molar ratio) is preferably 95 to 300, more preferably 100 or more or 200 or less, and even more preferably 110 or more or 150 or less.

Both the niobium fluoride aqueous solution and the ammonia aqueous solution may be at room temperature.

In the reverse neutralization step, when the niobium fluoride aqueous solution is added to the ammonia aqueous solution, it is preferable to perform the neutralization reaction within a period of 1 minute. That is, instead of gradually adding the niobium fluoride aqueous solution over a period of time, it is preferable to add the niobium fluoride aqueous solution within a period of 1 minute or less, for example, by adding the aqueous solution at once, for the neutralization reaction.

In this case, the addition time of the niobium fluoride aqueous solution is preferably 1 minute or less, more preferably 30 seconds or less, and even more preferably 10 seconds or less.

### (F-Washing Step)

The liquid obtained by the neutralization reaction, that is, the niobium-containing precipitate contains fluorine compounds such as ammonium fluoride as impurities, and thus it is preferable to remove them.

The method for removing the fluorine compounds is arbitrary. For example, centrifugation and other known methods can be adopted in addition to methods such as reverse osmosis filtration using ammonia water or pure water, ultrafiltration, and filtration using a membrane such as microfiltration.

The F-washing step may be performed at room temperature, and each temperature adjustment is not particularly necessary.

### (Drying Step)

Next, the niobium-containing precipitate obtained by removing fluorine in the above step can be dried to obtain the present niobate compound.

As the drying method in this case, any known drying method can be adopted as appropriate.

### <Present Niobium-Containing Slurry>

The present niobate compound can be dispersed in a dispersion medium to form a niobium-containing slurry (referred to as "present niobium-containing slurry").

Here, the term "slurry" means a state in which solid particles composed of the present niobate compound are dispersed and suspended in a liquid, and also encompasses a state of sol.

The present niobium-containing slurry can be obtained by performing the following slurry step, instead of the drying step, in the above-mentioned method for producing the present niobate compound. That is, the niobium-containing precipitate obtained by removing fluorine in the F-washing step can be dispersed in a dispersion medium to obtain the present niobium-containing slurry.

The present niobium-containing slurry contains niobium preferably in a ratio of 0.1% by mass to 40% by mass in terms of Nb₂O₅, more preferably 0.5% by mass or more, and even more preferably 1% by mass or more. Meanwhile, it contains niobium preferably in a ratio of 30% by mass or less, and more preferably 20% by mass or less.

The content of niobium is shown in terms of Nb₂O₅ based on the convention for showing Nb concentration. In the present niobium-containing slurry, Nb is not necessarily present in the Nb₂O₅ state, and does not necessarily contain Nb₂O₅.

The dispersion medium may be any of water, ammonia water, an amine aqueous solution, a diluted alkali metal hydroxide aqueous solution, or a combination of two or more of these.

When using ammonia water or an amine aqueous solution as the dispersion medium, it is necessary to adjust the concentration and the amount of the ammonia water or amine aqueous solution such that at least a part of the contained niobate compound remains as particles (particles of 1.0 µm or more are observed by a dynamic light scattering method).

Preferred examples of the amine include alkylamine described later, choline ([(CH₃)₃NCH₂CH₂OH]⁺), and choline hydroxide ([(CH₃)₃NCH₂CH₂OH]⁺OH⁻).

As the alkylamine, those having 1 to 4 alkyl groups can be used. When having 2 to 4 alkyl groups, the 2 to 4 alkyl groups may all be the same or may be different. As for the alkyl group of the alkylamine, from the viewpoint of solubility, the alkyl group preferably has 1 to 6 carbon atoms, more preferably 4 or less carbon atoms, even more preferably 3 or less carbon atoms, and still more preferably 2 or less carbon atoms.

Specific examples of the alkylamine include methylamine, dimethylamine, trimethylamine, tetramethylammonium hydroxide, ethylamine, methylethylamine, diethylamine, triethylamine, methyldiethylamine, dimethylethylamine, tetraethylammonium hydroxide, n-propylamine, di-n-propylamine, tri-n-propylamine, iso-propylamine, di-iso-propylamine, tri-iso-propylamine, n-butylamine, di-n-butylamine, tri-n-butylamine, iso-butylamine, di-iso-butylamine, tri-iso-butylamine, tert-butylamine, n-pentaamine, and n-hexylamine.

Among them, from the viewpoint of solubility, methylamine, dimethylamine, trimethylamine, tetramethylammonium hydroxide, ethylamine, methylethylamine, diethylamine, triethylamine, methyldiethylamine, dimethylethylamine, and tetraethylammonium hydroxide are preferred; and among these, methylamine, dimethylamine, trimethylamine, and tetramethylammonium hydroxide are more preferred. In particular, dimethylamine is most preferred.

### (Method for Confirming Present Niobate Compound in Present Niobium-Containing Slurry)

In order to confirm whether or not the obtained niobium-containing slurry is the present niobium-containing slurry, in other words, whether or not the obtained niobium-containing slurry contains the present niobate compound, for example, the niobium-containing slurry is centrifuged to remove the supernatant for obtaining a precipitate, and leaving to stand the precipitate in an atmosphere of 60°C and a vacuum (0.08 MPa or less) for 15 hours for drying. The resulting dried product can be subjected to powder X-ray diffraction measurement in the same manner as described for the present niobate compound for confirmation.

### (Reactivity with Alkali Metals)

As with the present niobate compound, the present niobium-containing slurry also has high reactivity with alkali metals, and can be reacted by mixing with hydroxides of alkali metals such as NaOH, LiOH, and KOH at room temperature to obtain a compound having a polyacid structure.

Specifically, the present niobium-containing slurry can be mixed and reacted with Na hydroxide at room temperature (10°C to 35°C) to synthesize Na₈Nb₆O₁₉·13H₂O.

### <Applications of Present Niobate Compound and Present Niobium-Containing Slurry>

The present niobate compound and the present niobium-containing slurry are useful for synthesizing alkali metal niobates. It is also useful for catalyst raw materials. Furthermore, it is also useful for synthesizing conductive materials, photocatalytic materials, and other composite materials.

### <Explanation of Terms and Phrases>

The expression "X to Y" (X and Y are arbitrary numbers) in the present specification also includes the intention of "preferably more than X" or "preferably less than Y" as well as the intention of "X or more and Y or less" unless otherwise stated.

In addition, the expression "X or more" (X is an arbitrary number) or "Y or less" (Y is an arbitrary number) also includes the intention of "preferably more than X" or "preferably less than Y".

### EXAMPLES

The present invention will be further described based on the following Examples. However, the present invention is not limited to the following Examples.

### (Example 1)

First, 100g of niobium pentoxide was dissolved in 200 g of a 55% by mass hydrofluoric acid aqueous solution, and 830 mL of ion-exchanged water was added therein to obtain a niobium fluoride aqueous solution containing 100 g/L of niobium in terms of Nb₂O₅ (Nb₂O₅ = 8.84% by mass).

Then, 200 mL of the niobium fluoride aqueous solution was added to 1 L of ammonia water (NH₃ concentration of 25% by mass) in less than 1 minute to obtain a reaction solution (pH 11). This reaction solution was a slurry of a niobate compound hydrate, or in other words, a slurry of a niobium-containing precipitate.

Next, the reaction solution was decanted using a centrifuge, and washed until the amount of free fluorine in the supernatant was 100 mg/L or less to obtain a niobium-containing precipitate from which fluorine was removed. At this time, ammonia water was used as the washing solution.

A portion of the niobium-containing precipitate was calcined at 1,000°C for 4 hours to form Nb₂O₅, and the concentration of Nb₂O₅ contained in the niobium-containing precipitate was calculated from the mass thereof.

The other portion of the niobium-containing precipitate was diluted with pure water to prepare a niobium-containing slurry (sample) having a Nb₂O₅ concentration of 10% by mass.

### (Example 2)

First, 100 g of niobium pentoxide was dissolved in 200 g of a 55% by mass hydrofluoric acid aqueous solution, and 1,830 mL of ion-exchanged water was added therein to obtain a niobium fluoride aqueous solution containing 50 g/L of niobium in terms of Nb₂O₅ (Nb₂O₅ = 4.69% by mass).

Then, 400 mL of the niobium fluoride aqueous solution was added to 1 L of ammonia water (NH₃ concentration of 25% by mass) in less than 1 minute to obtain a reaction solution (pH 11). This reaction solution was a slurry of a niobate compound hydrate, or in other words, a slurry of a niobium-containing precipitate.

Next, the reaction solution was decanted using a centrifuge, and washed until the amount of free fluorine in the supernatant was 100 mg /L or less to obtain a niobium-containing precipitate from which fluorine was removed. At this time, ammonia water was used as the washing solution.

A portion of the niobium-containing precipitate was calcined at 1,000°C for 4 hours to form Nb₂O₅, and the concentration of Nb₂O₅ contained in the niobium-containing precipitate was calculated from the mass thereof.

Pure water and 40% by mass methylamine were added to the other portion of the niobium-containing precipitate to prepare a niobium-containing slurry (sample) having a Nb₂O₅ concentration of 10% by mass and a methylamine concentration of 0.2% by mass.

### (Example 3)

First, 100 g of niobium pentoxide was dissolved in 200g of a 55% by mass hydrofluoric acid aqueous solution, and 9,800 mL of ion-exchanged water was added therein to obtain a niobium fluoride aqueous solution containing 10.3 g/L of niobium in terms of Nb₂O₅ (Nb₂O₅ = 1% by mass).

Then, 2 L of the niobium fluoride aqueous solution was added to 2 L of ammonia water (NH₃ concentration of 25% by mass) in less than 1 minute to obtain a reaction solution (pH 12). This reaction solution was a slurry of a niobate compound hydrate, or in other words, a slurry of a niobium-containing precipitate. Next, the reaction solution was decanted using a centrifuge, and washed until the amount of free fluorine in the supernatant was 100 mg/L or less to obtain a niobium-containing precipitate from which fluorine was removed. At this time, ammonia water was used as the washing solution.

A portion of the niobium-containing precipitate was calcined at 1,000°C for 4 hours to form Nb₂O₅, and the concentration of Nb₂O₅ contained in the niobium-containing precipitate was calculated from the mass thereof.

The other portion of the niobium-containing precipitate was diluted with pure water to prepare a niobium-containing slurry (sample) having a Nb₂O₅ concentration of 10% by mass.

### (Example 4)

First, 100 g of niobium pentoxide was dissolved in 200 g of a 55% by mass hydrofluoric acid aqueous solution, and 830 mL of ion-exchanged water was added therein to obtain a niobium fluoride aqueous solution containing 100 g/L of niobium in terms of Nb₂O₅ (Nb₂O₅ = 8.84% by mass).

Then, 220 mL of the niobium fluoride aqueous solution was added to 2 L of ammonia water (NH₃ concentration of 5% by mass) in less than 1 minute to obtain a reaction solution (pH 10). This reaction solution was a slurry of a niobate compound hydrate, or in other words, a slurry of a niobium-containing precipitate.

Next, the reaction solution was decanted using a centrifuge, and washed until the amount of free fluorine in the supernatant was 100 mg/L or less to obtain a niobium-containing precipitate from which fluorine was removed. At this time, ammonia water was used as the washing solution.

A portion of the niobium-containing precipitate was calcined at 1,000°C for 4 hours to form Nb₂O₅, and the concentration of Nb₂O₅ contained in the niobium-containing precipitate was calculated from the mass thereof.

The other portion of the niobium-containing precipitate was diluted with pure water to prepare a niobium-containing slurry (sample) having a Nb₂O₅ concentration of 10% by mass.

### (Example 5)

First, 100 g of niobium pentoxide was dissolved in 200g of a 55% by mass hydrofluoric acid aqueous solution, and 830 mL of ion-exchanged water was added therein to obtain a niobium fluoride aqueous solution containing 100 g/L of niobium in terms of Nb₂O₅ (Nb₂O₅ = 8.84% by mass).

Then, 220 mL of the niobium fluoride aqueous solution was added to 550 mL of ammonia water (NH₃ concentration of 5% by mass) in less than 1 minute to obtain a reaction solution (pH 9). This reaction solution was a slurry of a niobate compound hydrate, or in other words, a slurry of a niobium-containing precipitate.

Next, the reaction solution was decanted using a centrifuge, and washed until the amount of free fluorine in the supernatant was 100 mg/L or less to obtain a niobium-containing precipitate from which fluorine was removed. At this time, ammonia water was used as the washing solution.

A portion of the niobium-containing precipitate was calcined at 1,000°C for 4 hours to form Nb₂O₅, and the concentration of Nb₂O₅ contained in the niobium-containing precipitate was calculated from the mass thereof.

The other portion of the niobium-containing precipitate was diluted with pure water to prepare a niobium-containing slurry (sample) having a Nb₂O₅ concentration of 10% by mass.

### (Comparative Example 1)

First, 100 g of niobium pentoxide was dissolved in 200 g of a 55% by mass hydrofluoric acid aqueous solution, and 830 mL of ion-exchanged water was added therein to obtain a niobium fluoride aqueous solution containing 100 g/L of niobium in terms of Nb₂O₅ (Nb₂O₅ = 8.84% by mass).

Then, 200 mL of ammonia water (NH₃ concentration of 25% by mass) was added to 200 mL of the niobium fluoride aqueous solution over a period of 60 minutes to obtain a reaction solution (pH10) (positive neutralization). This reaction solution was a slurry of a niobate compound hydrate, or in other words, a slurry of a niobium-containing precipitate.

Next, the reaction solution was washed by Nutsche filtration using 5C filter paper until the amount of free fluorine in the supernatant was 100 ppm or less to obtain a niobate compound hydrate. At this time, ammonia water was used as the washing solution.

A portion of the niobium-containing precipitate was calcined at 1,000°C for 4 hours to form Nb₂O₅, and the concentration of Nb₂O₅ contained in the niobium-containing precipitate was calculated from the mass thereof.

The other portion of the niobium-containing precipitate was diluted with pure water to prepare a niobium-containing slurry (sample) having a Nb₂O₅ concentration of 10% by mass.

### (Comparative Example 2)

First, 100 g of niobium pentoxide was dissolved in 200 g of a 55% by mass hydrofluoric acid aqueous solution, and 19,600 mL of ion-exchanged water was added therein to obtain a niobium fluoride aqueous solution containing 5.1 g/L of niobium in terms of Nb₂O₅ (Nb₂O₅ = 0.5% by mass).

Then, 9 L of the niobium fluoride aqueous solution was added to 5 L of ammonia water (NH₃ concentration of 1% by mass) over a period of 60 minutes to obtain a reaction solution (pH 8) (reverse neutralization). This reaction solution was a slurry of a niobate compound hydrate, or in other words, a slurry of a niobium-containing precipitate.

Next, the slurry was washed using a filtration apparatus (Microza UF: model ACP-0013D, manufactured by Asahi Kasei Corporation) until the amount of free fluorine in the filtrate was 100 mg/L or less to obtain a niobium-containing concentrated slurry from which fluorine was removed.

A portion of the niobium-containing concentrated slurry was dried at 110°C for 24 hours and then calcined at 1,000°C for 4 hours to form Nb₂O₅, and the concentration of Nb₂O₅ contained in the slurry was calculated from the mass thereof. As a result, the slurry had a Nb₂O₅ concentration of 32% by mass.

The other portion of the niobium-containing concentrated slurry from which fluorine was removed was diluted with pure water to prepare a niobium-containing slurry (sample) having a Nb₂O₅ concentration of 10% by mass.

### (Example 6)

A niobium-containing precipitate from which fluorine was removed was obtained in the same manner as in Example 1, and 10 g of the niobium-containing precipitate was vacuum-dried at 60°C for 15 hours to obtain a niobate compound (sample).

### (Comparative Example 3)

A niobium-containing concentrated slurry from which fluorine was removed was obtained in the same manner as in Comparative Example 2, and 10 g of the niobium-containing concentrated slurry from which fluorine was removed was vacuum-dried at 60°C for 15 hours to obtain a niobate compound (sample).

### < Reactivity Test with NaOH>

First, 30 g of the niobium-containing slurry (sample) obtained in each of Examples 1 to 5 and Comparative Example 1 and 2 was weighed, and 30 mL of a 5.7% by mass sodium hydroxide aqueous solution was added thereto over a period of 1 minute while stirring using a magnetic stirrer (stirring speed: 150 rpm). After the addition, the mixture was stirred for 5 minutes, and the precipitate was subjected to Nutsche filtration. The resulting product was washed with pure water, and then vacuum-dried by heating at 60°C (set temperature) for 15 hours in a vacuum drying furnace. The resulting dried product was pulverized in an agate mortar, and the resulting powder was subjected to X-ray diffraction measurement. The measurement results are shown in Table 1.

As for Example 6 and Comparative Example 3, the same procedure as above was carried out except that 3 g of the niobate compound (sample) obtained in each of Example 6 and Comparative Example 3 was weighed instead of the niobium-containing slurry (sample), and reacted with 50 mL of a 2.5% by mass sodium hydroxide aqueous solution. The resulting powder was then subjected to X-ray diffraction measurement. The measurement results are shown in Table 2.

At this time, the X-ray diffraction measurement conditions and the X-ray diffraction analysis conditions were the same as those of the following <XRD measurement.

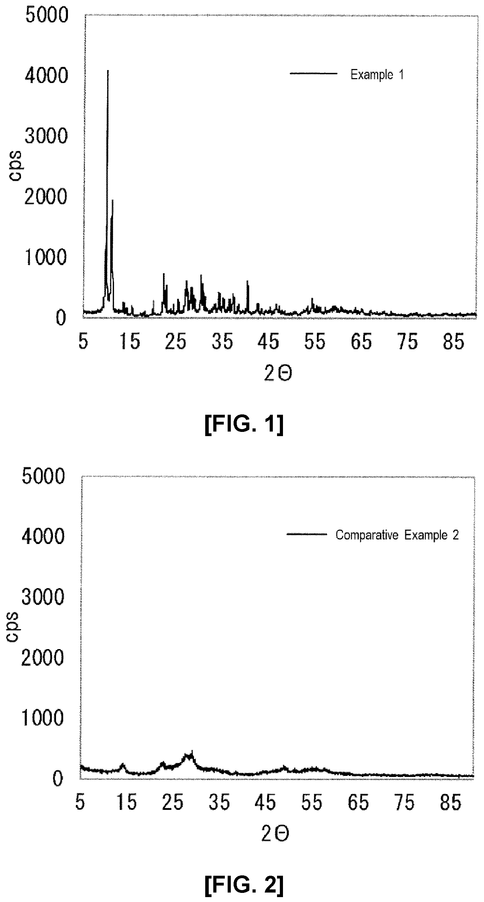

FIGS. 1 and 2 show the X-ray diffraction pattern of the powder obtained by reacting the niobium-containing slurry (sample) obtained in each of Example 1 and Comparative Example 2 with a sodium hydroxide aqueous solution.

Both the powder obtained by reacting the niobium-containing slurry (sample) obtained in each of Examples 1 to 5 with a sodium hydroxide aqueous solution, and the powder obtained by reacting the niobate compound (sample) obtained in Example 6 with a sodium hydroxide aqueous solution were identified to be composed of Na₈Nb₆O₁₉·13H₂O of ICDD card No. 00-014-0370 from the X-ray diffraction measurement results.

On the other hand, the powder obtained by reacting the niobium-containing slurry (sample) obtained in each of Comparative Examples 1 and 2 with a sodium hydroxide aqueous solution, as well as the powder obtained by reacting the niobate compound (sample) obtained in Comparative Example 3 with a sodium hydroxide aqueous solution were both amorphous and no niobate compound was obtained, when the X-ray diffraction measurements were performed.

In Tables 1 and 2, the case where the powder after the reaction was identified to be composed of Na₈Nb₆O₁₉·13H₂O was indicated by "○", and the case where it was not identified was indicated by "×".

### <XRD Measurement>

The niobium-containing slurry (sample) obtained in each of Examples 1 to 5 and Comparative Examples 1 and 2 was centrifuged at 4,000 rpm for 10 minutes using a himac CT6E manufactured by Koki Holdings Co., Ltd. to remove the supernatant, thereby obtaining a precipitate. Then, 4 g of the resulting precipitate was left to stand in an atmosphere of 60°C and a vacuum (0.08 MPa or less) for 15 hours using a decompression drying furnace and dried to obtain a niobate compound (sample).

These niobate compounds (samples) and the niobate compounds of Example 6 and Comparative Example 3 (samples) were subjected to powder X-ray diffraction measurement using CuKα rays, thereby obtaining X-ray diffraction patterns.

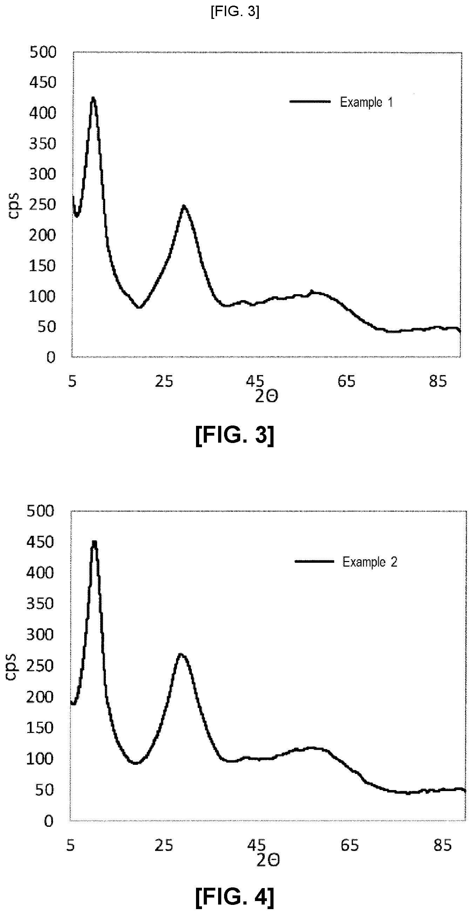

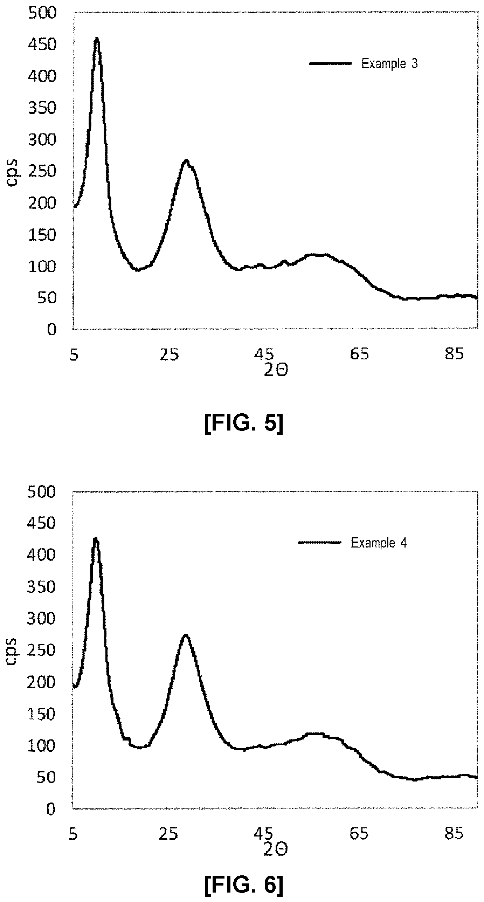

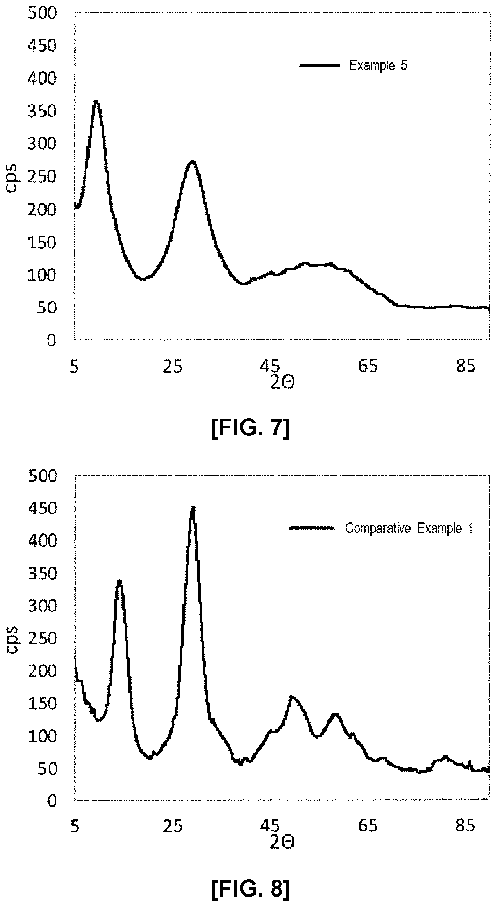

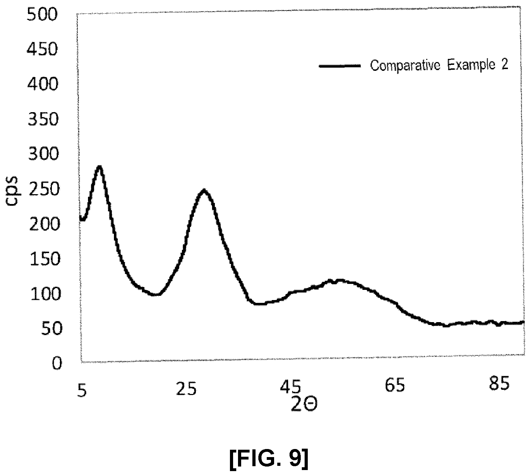

FIGS. 3, 4, 5, 6, 7, 8, and 9 show the X-ray diffraction pattern of the niobate compound (sample) obtained from the niobium-containing slurry (sample) obtained in each of Examples 1, 2, 3, 4, and 5, and Comparative Examples 1 and 2.

The X-ray diffraction pattern of the niobate compound (sample) obtained in Example 6 was almost the same as that of the niobate compound (sample) obtained in Example 1.

In addition, the X-ray diffraction pattern of the niobate compound (sample) obtained in Comparative Example 3 was almost the same as that of the niobate compound (sample) obtained in Comparative Example 2.

=X-Ray Diffraction Measurement Conditions=
- Apparatus: MiniFlex II (manufactured by Rigaku Corporation).
- Measurement range (2θ): 5° to 90°
- Sampling width: 0.02°
- Scanning speed: 2.0°/min
- X-rays: CuKα rays
- Voltage: 30 kV
- Current: 15 mA
- Divergence slit: 1.25°
- Scattering slit: 1.25°
- Light-receiving slit: 0.3 mm

=X-Ray Diffraction Analysis Conditions=
- PDXL2 data analysis software manufactured by Rigaku Corporation was used.
- Peaks were smoothed by b-spling to clarify the peak tops.

The intensities of a first peak and a second peak were determined from the X-ray diffraction pattern obtained by the measurement, and the ratio of a first peak intensity to a second peak intensity (first/second intensity ratio) was calculated. The results are shown in Table 3.

Here, the first peak was defined as the peak having the highest intensity at 2θ = 9.4° ± 1.5°, and the intensity thereof was defined as the first peak intensity.

The second peak was defined as the peak having the highest intensity at 2θ = 29.0° ± 1.5°, and the intensity thereof was defined as the second peak intensity.

**[Table 1]**

| | | | Unit | Examples | | | | | Comparati ve Examples | |
|---|---|---|---|---|---|---|---|---|---|---|
| | | | | 1 | 2 | 3 | 4 | 5 | 1 | 2 |
| Neutralization conditions | Nb₂O₅ concentration of niobium fluoride aqueous solution | | g/L | 100 | 50 | 10.3 | 100 | 100 | 100 | 5.1 |
| | Amount of niobium fluoride aqueous solution | | mL | 200 | 400 | 2000 | 220 | 220 | 200 | 9000 |
| | Ammonia concentration | | % by mass | 25 | 25 | 25 | 5 | 5 | 25 | 1 |
| | Ammonia amount | | mL | 1000 | 1000 | 2000 | 2000 | 550 | 200 | 5000 |
| | Neutralization method | | | Reverse neutralization | Reverse neutralization | Reverse neutralization | Reverse neutralization | Reverse neutralization | Positive neutralization | Reverse neutralization |
| | Neutralization time | | Min | <1 | <1 | <1 | <1 | <1 | 60 | 60 |
| | pH after neutralization | | | 11 | 11 | 12 | 10 | 9 | 10 | 8 |
| Niobium-containing slurry | | Nb₂O₅ | % by mass | 10 | 10 | 10 | 10 | 10 | 10 | 10 |
| | | Liquid volume | 9 | 30 | 30 | 30 | 30 | 30 | 30 | 30 |
| | | Nb₂O₅ | 9 | 3 | 3 | 3 | 3 | 3 | 3 | 3 |
| | | Methylamine | g | 0 | 0.06 | 0 | 0 | 0 | 0 | 0 |
| | | Nb | mol | 0.023 | 0.023 | 0.023 | 0.023 | 0.023 | 0.023 | 0.023 |
| Na hydroxide aqueous solution | | NaOH | g | 1.81 | 1.81 | 1.81 | 1.81 | 1.81 | 1.81 | 1.81 |
| | | | mol | 0.045 | 0.045 | 0.045 | 0.045 | 0.045 | 0.045 | 0.045 |
| | | Pure water | mL | 30 | 30 | 30 | 30 | 30 | 30 | 30 |
| Presence or absence of Na₈Nb₆O₁₉·13H₂O after reaction | | | | ○ | ○ | ○ | ○ | ○ | × | × |

**[Table 2]**

| | | | Example | Comparative Example |
|---|---|---|---|---|
| | | | 6 | 3 |
| Neutralization conditions | | | Example 1 | Comparative Example 2 |
| Niobate compound 60°C vacuum drying 15h mortar-crushed powder | Amount | 9 | 3 | 3 |
| | Nb₂O₅ | % by mass | 70.3 | 60 |
| | | 9 | 2.1 | 1.8 |
| | Nb | mol | 0.016 | 0.014 |
| NaOH aqueous solution | Amount | 9 | 1.269 | 1.083 |
| | Amount | mol | 0.032 | 0.027 |
| | Pure water | 9 | 50 | 50 |
| Presence or absence of Na₈Nb₆O₁₉·13H₂O after reaction | | | ○ | × |

**[Table 3]**

| | | Example 1 | Example 2 | Example 3 | Example 4 | Example 5 | Comparative Example 1 | Comparative Example 2 |
|---|---|---|---|---|---|---|---|---|
| First peak | 2θ(°) | 9.2 | 9.9 | 9.7 | 9.7 | 9.4 | No peak | 9.0 |
| | Intensity (cps) | 425.0 | 452.1 | 459.7 | 427.3 | 365.7 | - | 281.5 |
| Second peak | 2θ(°) | 29.2 | 28.7 | 28.7 | 28.7 | 29.2 | 29.2 | 29.1 |
| | Intensity (cps) | 247.8 | 269.3 | 265.7 | 274.2 | 272.7 | 451.2 | 245.8 |
| First / second intensity ratio | | 1.7 | 1.7 | 1.7 | 1.6 | 1.3 | 0 | 1.1 |

### (Considerations)

Based on the results of the above Examples and Comparative Examples, as well as the results of the tests conducted by the present inventors so far, it was found that when the niobate compound had a ratio (first peak/second peak) of the first peak intensity to the second peak intensity being 1.3 or more, the niobate compound could be reacted with sodium hydroxide at room temperature to synthesize a polyacid (Na₈Nb₆O₁₉·13H₂O). It was also found that the niobium-containing slurry using the niobate compound could be reacted with sodium hydroxide at room temperature to synthesize a polyacid (Na₈Nb₆O₁₉·13H₂O).

Thus, it could be understood that the niobate compound described above and the niobium-containing slurry containing the same had excellent reactivity with alkali metal salts and could be reacted with alkali metal salts at room temperature.

## Claims

1. A niobate compound, having a ratio (first peak/second peak) of the intensity of a peak (first peak) having the highest intensity at 2θ = 9.4° ± 1.5° to the intensity of a peak (second peak) having the highest intensity at 2θ = 29.0° ± 1.5° being 1.3 or more, in an X-ray diffraction pattern measured by powder X-ray diffraction measurement using CuKα rays.

2. The niobate compound according to claim 1, having a polyacid structure.

3. A niobium-containing slurry, comprising the niobate compound according to claim 1 or 2 dispersed in a dispersion medium.

4. The niobium-containing slurry according to claim 3, wherein the dispersion medium comprises ammonia or amine.

5. A method for producing a niobate compound, comprising the following 3 steps:
(1) a step of adding a niobium fluoride aqueous solution containing 1 to 100 g/L of niobium in terms of Nb₂O₅ to an ammonia aqueous solution having an ammonia concentration of 5% by mass to 30% by mass for reaction to obtain a niobium-containing precipitate;
(2) a step of removing fluorine from the niobium-containing precipitate obtained in the above step; and
(3) a step of drying the niobium-containing precipitate obtained by removing fluorine.

6. A method for producing a niobium-containing slurry, comprising the following 3 steps:
(1) a step of adding a niobium fluoride aqueous solution containing 1 to 100 g/L of niobium in terms of Nb₂O₅ to an ammonia aqueous solution having an ammonia concentration of 5% by mass to 30% by mass for reaction to obtain a niobium-containing precipitate;
(2) a step of removing fluorine from the niobium-containing precipitate obtained in the above step; and
(3) a step of dispersing the niobium-containing precipitate obtained by removing fluorine in a dispersion medium to obtain a niobium-containing slurry.

7. The method for producing a niobate compound according to claim 5 or the method for producing a niobium-containing slurry according to claim 6, wherein in the step (1), the niobium fluoride aqueous solution is added to the ammonia aqueous solution within 1 minute for a neutralization reaction.

8. The niobate compound according to claim 1 or 2, being used for catalyst raw materials.

9. The niobium-containing slurry according to claim 3 or 4, being used for catalyst raw materials.
